# EUROPÄISCHE PATENTSCHRIFT

(11) **EP 0 524 136 B1**
(45) Veröffentlichungstag und Bekanntmachung des Hinweises auf die Patenterteilung: **14.12.1994**
(21) Anmeldenummer: 92810408.2
(22) Anmeldetag: 27.05.1992
(51) Int. Cl.: F16B 13/12

(54) **Spreizdübel**
Expansion plug
Pince à expansion

(30) Priorität: 25.06.1991 DE 4120857
(43) Veröffentlichungstag der Anmeldung: 20.01.1993
(73) Patentinhaber: HILTI Aktiengesellschaft, 9494 Schaan (LI)
(72) Erfinder: Bisping, Heinz, W-8900 Augsburg (DE); Götzfried, Horst, W-8939 Igling (DE); Popp, Franz, W-8939 Buchloe (DE); Hausner, Wolfgang, W-8939 Igling (DE); Mirsberger, Helmut, W-8000 München 70 (DE)
(74) Vertreter: Wildi, Roland

(56) Entgegenhaltungen:
- CH-A- 485 129
- DE-A- 1 813 812
- DE-A- 3 917 498
- GB-A- 2 200 966

## Beschreibung

Die Erfindung betrifft einen Spreizdübel mit einem von einem Spreizelement aufweitbaren Spreizteil, das beidseits einer Zentralöffnung zwei in Einführrichtung offene Längsschlitze und entgegen der Einführrichtung zwei axial geschlossene Längsschlitze aufweist, wobei die axial geschlossenen Längsschlitze zu den offenen Längsschlitzen in Umfangsrichtung um 90° versetzt sind, die axial geschlossenen Längsschlitze und die offenen Längsschlitze sich teilweise überlappen und in den axial geschlossenen Längsschlitzen sich über einen Teil der Länge der Längsschlitze erstreckende, radial bewegliche, mit einer die Wandstärke des Spreizteils überragenden, radialen Erstreckung versehene Vorsprünge vorgesehen sind, die um senkrecht zur Schlitzebene verlaufende, im einführrichtungsseitigen Bereich der axial geschlossenen Längsschlitze angeordnete Schwenkachsen schwenkbar sind.

Ein aus der DE-OS 3 917 498 bekannter Spreizdübel weist beidseits einer Zentralöffnung in Einführrichtung verlaufend zwei offene und zwei axial geschlossene Längsschlitze auf. Die axial geschlossenen Längsschlitze sind gegenüber den axial offenen Längsschlitzen um 90° versetzt und die Schlitze sind hintereinander angeordnet.

Um einen Spreizdübel der genannten Art befestigen zu können, wird das Spreizelement in die Zentralöffnung in Einführrichtung eingetrieben. Aufgrund eines geringeren Querschnittes der Zentralöffnung im Bereich der Längsschlitze wird zum einen ein radiales Aufspreizen und zum anderen ein Verdichten des Materials des Spreizteils erreicht. Beim Eintreiben des Spreizelementes neigt dieses dazu, in der Ebene der Schlitzrichtung seitlich zu verlaufen, so dass das Spreizelement am Ende des Eintreibvorganges schräg im Spreizteil angeordnet ist. Aus diesem Grund sind die Längsschlitze bei dem bekannten Spreizteil hintereinander und um 90° zueinander versetzt angeordnet. Dadurch wird eine Zentrierung des Spreizelementes in dem Spreizteil erreicht.

Da der Uebergangsbereich zwischen den Längsschlitzen nicht radial aufweitbar ist, kann in diesem Bereich somit ein Verspreizen des Spreizteiles gegenüber der Bohrlochwandung nicht erreicht werden. Aufgrund der beim Eintreiben des Spreizelementes entstehenden hohen Materialverdichtung besteht die Gefahr des Abreissens des vorderen Bereichs des Spreizteils, in dem die axial offenen Längsschlitze angeordnet sind.

Aus der DE-OS 1 813 812 ist ein weiterer Spreizdübel bekannt, welcher beidseits einer Zentralöffnung zwei in Einführrichtung offene Längsschlitze und zwei axial geschlossene Längsschlitze aufweist. In den axial geschlossenen Längsschlitzen sind Vorsprünge gelagert, die um Schwenkachsen, die im einführrichtungsseitigen Endbereich der Längsschlitze angeordnet sind, sich verschwenken lassen. Diese Vorsprünge weisen eine radiale Erstreckung auf, welche die Wandstärke des Spreizteiles überragt. Die radiale Erstreckung nimmt zum freien Ende der Vorsprünge hin ab, was dazu führt, dass die verbleibende Zentralbohrung im einführrichtungsseitigen Endbereich der axial geschlossenen Längsschlitze am engsten ist. Da dieser engste Bereich der Zentralbohrung im Bereich der Schwenkachsen liegt, wird die Gefahr des Abreissen des vorderen Bereiches des Spreizteiles beim Eintreiben des Spreizelementes noch erhöht. Darüber hinaus werden aufgrund der in Einführrichtung zunehmenden radialen Erstreckung die Vorsprünge beim Eintreiben des Spreizelementes in die Zentralbohrung im einführrichtungsseitigen Bereich derart stark radial nach aussen getrieben, dass die Einführung des Spreizdübels in das Bohrloch behindert und sogar verunmöglicht wird.

Der Erfindung liegt die Aufgabe zugrunde, einen Spreizdübel zu schaffen, der die vorgenannten Nachteile verhindert und wirtschaftlich herstellbar ist.

Erfindungsgemäss wird dies dadurch erreicht, dass die radiale Erstreckung der Vorsprünge zu deren freien Enden hin entgegen der Einführrichtung stetig zunimmt.

Im nicht gesetzten Zustand überragen die Vorsprünge den Aussendurchmesser des Spreizteils. Beim Einführen des Spreizdübels in das Bohrloch werden die Vorsprünge des Spreizteils radial nach innen gedrückt. Auf diese Weise wird im Bereich der Vorsprünge eine Querschnittsverringerung der Zentralöffnung erreicht. Beim Eintreiben des Spreizelementes gelangt dieses mit dem einführrichtungsseitigen, vorderen Ende an den in die Zentralöffnung ragenden Vorsprüngen zur Anlage. Erfolgt eine zusätzliche Eintreibkraft, zB durch Schlagen, wird diese von dem Spreizelement über die Vorsprünge auf das Spreizteil übertragen, so dass eine axiale Bewegung des Spreizteils zum Bohrlochgrund erfolgt, ohne dass diese axiale Bewegung durch ein vorzeitiges Aufspreizen des Spreizteiles behindert wird. Besitzt das Spreizteil einen rückwärtigen, den Aussendurchmesser des Spreizteils überragenden Bund, so erfolgt der Eintreibvorgang so lange, bis der rückwärtige Bund am Bauteil anliegt.

Durch das Aufbringen einer höheren Eintreibkraft wird der Teil der Vorsprünge, der in der Zentralöffnung liegt, von dem vorderen Ende des Spreizelementes radial nach aussen gegen die Bohrlochwand gedrückt, so dass eine zusätzliche Verankerung des Spreizdübels in der Bohrung erfolgt.

Die schwenkbar angeordneten Vorsprünge können sich somit widerhakenartig an der Bohrlochwand festkrallen. Die Teile der Vorsprünge, deren radiale Erstreckung die Wandstärke des Spreizteils überragen, ragen axial in die Längsschlitze und sind in deren Schnittebene radial bewegbar. Beim Auftreten einer entgegen der Einführrichtung wirkenden Kraft auf das verankerte Spreizteil, graben sich die Vorsprünge immer tiefer in die Bohrlochwand hinein.

Aufgrund der Ueberlappung ist auch der Uebergangsbereich radial aufweitbar. Das seitliche Ausbrechen des Spreizelementes wird durch die axiale Ueberlappung der Längsschlitze verhindert.

Vorzugsweise entspricht die Länge der Ueberlappung der 0,3-bis 1-fachen Länge der axial geschlossenen Längsschlitze. Abhängig vom Durchmesser des Spreizelementes und dem Querschnitt der Zentralöffnung im Bereich der Längsschlitze kann die Länge der Ueberlappung gewählt werden. Ist der Querschnitt der Zentralöffnung relativ klein und der Durchmesser des Spreizelementes gross, so ist es vorteilhaft, wenn die Länge der Ueberlappung gross ist.

Die Erfindung wird nachstehend anhand von Zeichnungen, die ein Ausführungsbeispiel wiedergeben, näher erläutert. Es zeigen:
- Fig. 1: ein Spreizteil eines Spreizdübels gemäss Erfindung;
- Fig. 2: einen Schnitt durch das Spreizteil nach Fig. 1 gemäss Schnittverlauf II-II;
- Fig. 3: einen Spreizdübel mit geschnitten dargestelltem Spreizteil gemäss Fig. 2, in eingesetztem Zustand in Beton;
- Fig. 4: einen Spreizdübel mit geschnitten dargestelltem Spreizteil gemäss Fig. 2, in gesetztem Zustand in einem Hohlmauerwerk;

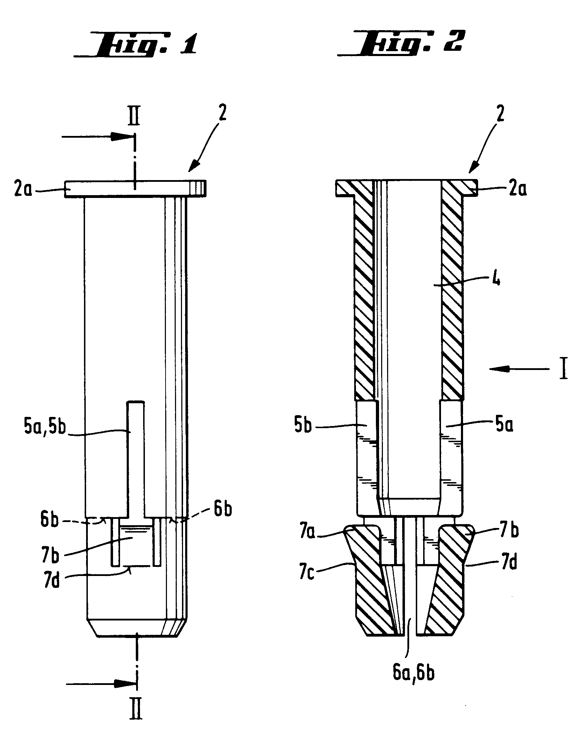

Die Fig. 1 und 2 zeigen ein von einem Spreizelement 3 aufweitbares Spreizteil 2, das beidseits einer Zentralöffnung 4 in Einführrichtung offene Längsschlitze 6a, 6b und entgegen der Einführrichtung zwei axial geschlossene Längsschlitze 5a, 5b aufweist, wobei die axial geschlossenen Längsschlitze 5a, 5b zu den offenen Längsschlitzen 6a, 6b in Umfangsrichtung um 90° versetzt sind. Die Zentralöffnung 4 weist im Bereich der Längsschlitze 5a, 5b, 6a, 6b einen geringeren Querschnitt auf.

An dem setzrichtungsseitig entgegengesetzten Ende des Spreizteils 2 ist ein Bund 2a angeordnet, dessen Durchmesser den Schaftdurchmesser des Spreizteils 2 überragt. In den axial geschlossenen Längsschlitzen 5a, 5b ist je ein radial beweglicher Vorsprung 7a, 7b angeordnet, deren Schwenkachsen 7c, 7d senkrecht zur Schlitzebene verlaufen und im einführrichtungsseitigen Endbereich der axial geschlossenen Längsschlitze 5a, 5b angeordnet sind. Durch die Ueberlappung der axial geschlossenen Längsschlitze 5a, 5b mit den axial offenen Längsschlitzen 6a, 6b wird eine Zentrierung des Spreizelementes 3 im Spreizteil gewährleistet.

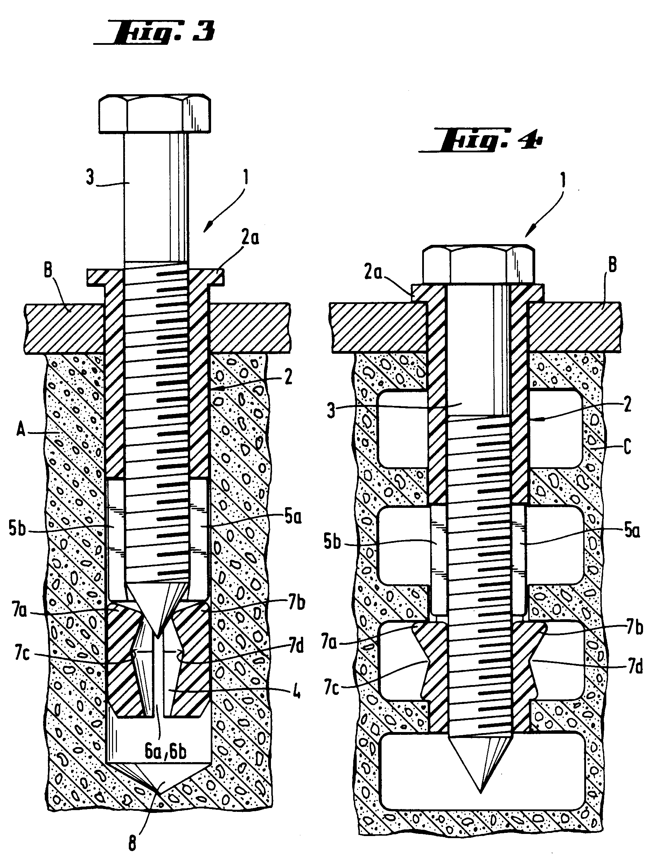

Der in Fig. 3 dargestellte Spreizdübel 1 besteht aus einem Spreizelement 3 in Form einer Schraube und einem Spreizteil 2 gemäss Fig. 1 und 2. Der Spreizdübel 1 steckt in einer Bohrung 8 eines Bauteiles A. Beide Vorsprünge 7a, 7b ragen radial nach innen, so dass eine Querschnittsverringerung in der Zentralöffnung 4 erfolgt. Gelangt das Spreizelement 3 während des Eintreibvorganges mit dem eintreibrichtungsseitigen, vorderen Bereich an den Vorsprüngen 7a, 7b zur Anlage, so erfolgt beim Aufbringen einer weiteren axialen Eintreibkraft eine Bewegung des Spreizteils 2 in Eintreibrichtung, so lange bis der rückwärtige Bund 2a an dem zu befestigenden Element B anliegt. Hat das Spreizteil 2 seine axiale Lage erreicht, so können die Vorsprünge 7a, 7b durch das Eintreiben des Spreizelementes 3 radial nach aussen gegen die Bohrlochwand gedrückt werden. Das Spreizelement 3 kann, wie in Fig. 3 dargestellt, als Schraube oder als Nagel bzw. Nagelschraube ausgebildet sein.

Der in Fig. 4 dargestellte Spreizdübel 1 entspricht dem Spreizdübel 1 in Fig. 3. Die Verwendung dieses Spreizdübels 1 ist hier in einem Kohlmauerwerk C dargestellt. Die Vorsprünge 7a, 7b ragen radial nach aussen in eine Kammer eines Hohlmauerwerks C.

Die Längsschlitze 5a, 5b, 6a, 6b können verschiedene Formen aufweisen. So zB können diese schmäler, breiter, unterschiedlich breit, sinusförmig gewellt oder zickzackartig ausgebildet sein.

## Patentansprüche

1. Spreizdübel mit einem von einem Spreizelement (3) aufweitbaren Spreizteil (2), das beidseits einer Zentralöffnung (4) zwei in Einführrichtung offene Längsschlitze (6a, 6b) und entgegen der Einführrichtung zwei axial geschlossene Längsschlitze (5a, 5b) aufweist, wobei die axial geschlossenen Längsschlitze (5a, 5b) zu den offenen Längsschlitzen (6a, 6b) in Umfangsrichtung um 90° versetzt sind, die axial geschlossenen Längsschlitze (5a, 5b) und die offenen Längsschlitze (6a, 6b) sich teilweise axial überlappen und in den axial geschlossenen Längsschlitzen (5a, 5b) sich über einen Teil der Länge der Längsschlitze (5a, 5b) erstreckende, radial bewegliche, mit einer die Wandstärke des Spreizteils (2) überragenden radialen Erstreckung versehene Vorsprünge (7a, 7b) vorgesehen sind, die um senkrecht zur Schlitzebene verlaufende, im einführrichtungsseitigen Bereich der axial geschlossenen Längsschlitze (5a, 5b) angeordnete Schwenkachsen (7c, 7d) schwenkbar sind, **dadurch gekennzeichnet**, dass die radiale Erstreckung der Vorsprünge (7a, 7b) zu deren freien Enden hin entgegen der Einführrichtung stetig zunimmt.

## Claims

1. An expanding dowel with an expanding portion (2) which is spread by an expanding element (3), comprising on both sides of a central aperture (4) two longitudinal slots (6a, 6b) which are open in the direction of insertion and two longitudinal slots (5a, 5b) which are closed against the direction of insertion, and that the axially closed longitudinal slots (5a, 5b) are transposed in the peripheral direction by 90° relative to the open longitudinal slots (6a, 6b), and that the axially closed longitudinal slots (5a, 5b) and the open longitudinal slots (6a, 6b) partially overlap axially, and that protrusions (7a, 7b) are provided, which extend in the axially closed longitudinal slots (5a, 5b) over a portion of the length of the longitudinal slots (5a, 5b) and which are radially movable and have a radial extent which protrudes over the wall thickness of the expanding portion (2) and which are pivotable around pivot axes (7c, 7d), which extend vertically to the slot plane and which are arranged in the insert area of the axially closed longitudinal slots (5a, 5b), **characterised in that** the radial extent of the protrusions (7a, 7b) continuously increases towards their free ends against the direction of insertion.

## Revendications

1. Cheville à expansion, comprenant un élément expansible (2) pouvant être élargi par un élément d'écartement (3) et présentant, de part et d'autre d'une ouverture centrale (4), deux fentes longitudinales (6a, 6b) ouvertes dans la direction d'introduction et deux fentes longitudinales (5a, 5b) axialement fermées dans le sens opposé à la direction d'introduction, les fentes longitudinales (5a, 5b) axialement fermées étant décalées dans le sens circonférentiel de 90° par rapport aux fentes longitudinales (6a, 6b) ouvertes, les fentes longitudinales (5a, 5b) axialement fermées et les fentes longitudinales (6a, 6b) ouvertes se recouvrant en partie dans le sens axial, et les fentes longitudinales (5a, 5b) axialement fermées présentant des saillies (7a, 7b) radialement mobiles qui s'étendent sur une partie de la longueur des fentes longitudinales (5a, 5b) et dont l'extension radiale dépasse l'épaisseur de paroi de l'élémentexpansible (2), et qui peuvent tourner autour d'axes de pivotement (7c, 7d) orientés perpendiculairement au plan des fentes et disposés dans la région située du côté introduction des fentes longitudinales (5a, 5b) axialement fermées, **caractérisée en ce** que l'extension radiale des saillies (7a, 7b) augmente progressivement en direction de leurs extrémités libres, dans le sens opposé à la direction d'introduction.
